# EUROPÄISCHE PATENTSCHRIFT

(11) **EP 3 235 880 B1**
(45) Veröffentlichungstag und Bekanntmachung des Hinweises auf die Patenterteilung: **14.11.2018**
(21) Anmeldenummer: 17170135.2
(22) Anmeldetag: 21.11.2011
(51) Int. Cl.: C09C 1/56, C09C 3/10, C08K 3/36, C08K 9/06, B60C 1/00, B29B 7/74, C08F 236/06

(54) **VERFAHREN ZUR HERSTELLUNG VON POLYMER-FUNKTIONALISIERTEN RUSSPARTIKELN**
PROCESS FOR PRODUCING POLYMER-FUNCTIONALIZED CARBON BLACK PARTICLES
PROCÉDÉ DE PRÉPARATION DE PARTICULES DE SUIE À FONCTIONNALITÉ POLYMÈRE

(30) Priorität: 24.11.2010 DE 102010060780
(43) Veröffentlichungstag der Anmeldung: 25.10.2017
(62) Teilanmeldung aus: 11787844.7
(73) Patentinhaber: Continental Reifen Deutschland GmbH, 30165 Hannover (DE)
(72) Erfinder: Herzog, Katharina, 31177 Harsum (DE); Recker, Carla, 30167 Hannover (DE); Müller, Lena, 31714 Lauenhagen (DE); Vana, Phillipp, 37581 Bad Gandersheim (DE); Springer, Björn, 63454 Hanau (DE)

(56) Entgegenhaltungen:
- EP-A2- 0 272 127
- QIANG YANG ET AL: "A temperature-responsive carbon black nanoparticle prepared by surface-induced reversible addition-fragmentation chain transfer polymerization", POLYMER, ELSEVIER SCIENCE PUBLISHERS B.V, GB , Bd. 48, Nr. 12 4. Juni 2007 (2007-06-04), Seiten 3444-3451, XP002677230, ISSN: 0032-3861, DOI: 10.1016/J.POLYMER.2007.02.064 Gefunden im Internet: URL:http://www.sciencedirect.com/science/a rticle/pii/S003238610700153X [gefunden am 2007-03-07]

## Beschreibung

Die Erfindung betrifft ein Verfahren zur Herstellung von polymer-funktionalisierten Rußpartikeln.

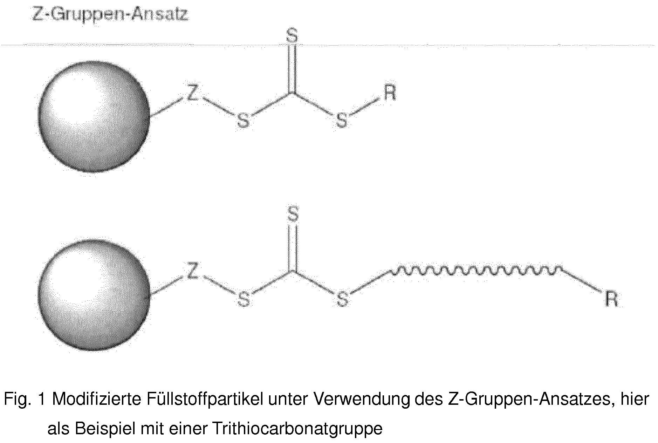

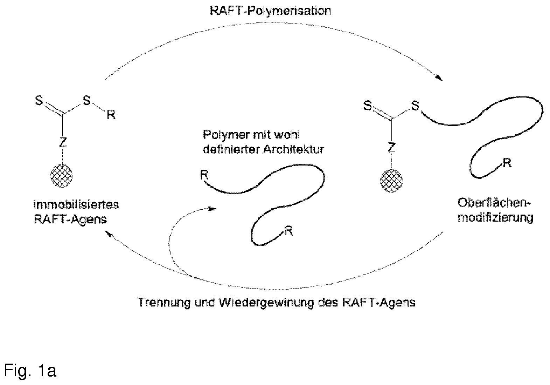

Die physikalischen Eigenschaften von anorganisch-organischen Hybridmaterialien hängen in erheblicher Weise von der Stärke sowie der Struktur und den Eigenschaften der Grenzfläche zwischen den enthaltenen Komponenten ab. Zur Verstärkung der Wechselwirkung zwischen polymerer und Füllstoffphase erfolgt zumeist der Einsatz von Kupplungsreagentien. Häufig handelt es sich dabei um funktionalisierte Alkyl-, Alkoxy- oder Halogensilane, welche befähigt sind, im Verlauf der Vulkanisation bzw. der Aushärtung des polymeren Systems eine kovalente Bindung an die Füllstoffoberfläche zu etablieren. Dieses konventionelle Verfahren ist mit dem Nachteil behaftet, dass oftmals lediglich eine geringe Kopplungsdichte erreicht wird. Auch eine gezielte Manipulation der Grenzphase zwischen polymerer Matrix und Füllstoffoberfläche ist auf diese Weise nicht oder nur begrenzt möglich.
Der "Reversible Addition Fragmentation Chain Transfer"-Prozess (RAFT) ist eine vielversprechende Methode zur Durchführung kontrolliert radikalischer Polymerisationen. Die strukturelle Anbindung des Polymeren an der Oberfläche kann durch die Wahl und den chemischen Aufbau der so genannten RAFT-Agentien gesteuert werden. Die funktionellen Zentren des RAFT-Agens verbleiben hierbei üblicherweise während der Polymerisation direkt an der Oberfläche (Z-Gruppen-Ansatz, siehe Fig.1 und Fig 1a). Die sogenannten R-Gruppen verbleiben folglich am Polymer und können zur spezifischen Funktionalisierung, allerdings durch die Verwendung des RAFT-Agens strukturell eingeschränkt, führen.

Die Anbindung der Füllstoffoberfläche erfolgt üblicherweise über kopplungsfähige Silylsubstituenten, oft als Z-Gruppe bezeichnet, (wie zum Beispiel -Si(OAlk)₃, -SiAlk(OAlk)₂ oder -SiAlk₂(OAlk)) an den entsprechenden RAFT-Agentien. Die Herstellung dieser Silan-substituierten RAFT-Agentien und die Möglichkeit der Vernetzung der einzelnen Silan-Gruppen von silanterminierten Polymerketten wird in der Offenlegungsschrift DE 10 2007 000 833 beschrieben. Allerdings war die Herstellung von silan-substituierten RAFT-Agentien der fachkundigen Person schon vorher bekannt, beispielsweise aus D.H. Nguyen, P.Vana, Polymers for Advances Technologies, 2006, 17, 625 oder aus L. Barner, T.P. Davis, M.H. Stenzel, C. Barner-Kowollik, Macromol. Rapid Commun., 2007, 28, 539.
Auch die Verankerung der RAFT-Agentien über die kopplungsfähige Silylgruppe wird in verschiedenen Veröffentlichungen beschrieben, beispielsweise in C.H. Liu, C.Y. Pan, Polymer, 2007, 48, 3679 oder in Y.L. Zhao, S. Perrier, Macromolecules, 2006, 39, 8603. Konventionelle Verfahren beinhalten die Ausstattung von Polymeren mit Endgruppen, welche sich reaktiv gegenüber der Füllstoffoberfläche verhalten und somit eine kovalente oder anders geartete Anbindung an die Füllstoffoberfläche im Verlauf des Misch- oder Vulkanisationsprozesses gestatten. In US 6,998,452 wird beispielsweise ein RAFT-ReAgens dargestellt, welches über eine mit einem kopplungsfähigen Silylsubstituenten ausgestattete Z-Gruppe verfügt. Die Z-Gruppe ist die Funktionalität, welche das radikalische Intermediat nach Addition einer Polymerkette stabilisiert. Diese Polymerisationsmethode wird als Grafting-to-Ansatz bezeichnet. Nachteil sind hierbei die geringen Pfropfdichten und eine gewisse Instabilität, da die Thiocarbonylthiogruppe des Kontrollagens in die Anbindung an den Füllstoff involviert ist. Darüber hinaus ist durch die Lokalisierung der RAFT-Gruppe an der Füllstoffoberfläche eine weitere Modifizierung des zweiten, freien Polymerendes nicht mehr möglich. Zudem gewinnen bei diesem Ansatz zunehmend sterische Hinderungen zwischen den wachsenden und den an die Oberfläche gebundenen Ketten an Einfluss, da die reaktiven Ketten zunächst durch die oberflächlichengebundene Polymerschicht diffundieren müssen, um mit der funktionellen RAFT-Gruppe zu reagieren.
Aus Q. Yang, L. Wang, W. D. Xiang, J. F. Zhou, Q. H. Tan, Polymer 2007, 48, 3444 ist die Möglichkeit der RAFT-Polymerisation von Rußpartikel bereits bekannt. Allerdings wird hier ein anderer Verankerungsmechanismus verwendet, wodurch eine starke und aufwändige Oberflächenmodifikation des Rußes von Nöten ist. Diese wird in mehreren Schritten durchgeführt und ist nur in kleineren Mengen präparativ durchführbar.
Der Erfindung liegt daher die Aufgabe zu Grunde, ein Verfahren zur Herstellung polymer-funktionalisierter Rußpartikel bereitzustellen, wodurch sich Vorteile, insbesondere hinsichtlich
- höherer Pfropfdichte;
- verbesserter chemischer Stabilität;
- nachträglicher Modifizierbarkeit und
- gezielter Beeinflussung der Grenzschicht zwischen fester Phase und polymerer Matrix
ergeben und so die oben genannten Nachteile verhindert werden können. Beim Einmischen der erfindungsgemäß hergestellten polymer-funktionalisierten Füllstoffpartikel in eine Kautschukmischung sollen nach der Vernetzung eine Verbesserung der Füllstoff-Polymer-Interaktion und dadurch bedingt deutlich optimierte Mischungseigenschaften erkennbar sein.
Gelöst wird diese Aufgabe durch ein Verfahren zur Herstellung polymer-funktionalisierter Füllstoffpartikel, wobei das Verfahren durch wenigstens folgende Verfahrensschritte gekennzeichnet ist:
- Anbindung eines Diels-Alder-Kontrollagens zur kontrollierten radikalischen Polymerisation an die Oberfläche eines Füllstoffpartikels, wobei die Gruppe R des RAFT-Agens über eine Gruppe R1 an die Oberfläche eines Füllstoffpartikels angebunden ist, wobei R1 wenigstens eine Diels-Alder-reaktive Funktionalität ist, wobei es sich bei den Füllstoffpartikeln um Rußpartikel handelt, und wobei das Kontrollagens zur kontrolliert radikalischen Polymerisation ausgewählt ist aus der Gruppe der Trithiocarbonate, und
- anschließende kontrollierte radikalische Polymerisation von Monomeren mit Hilfe des Kontrollagens, welches an dem Füllstoffpartikel gebunden ist.

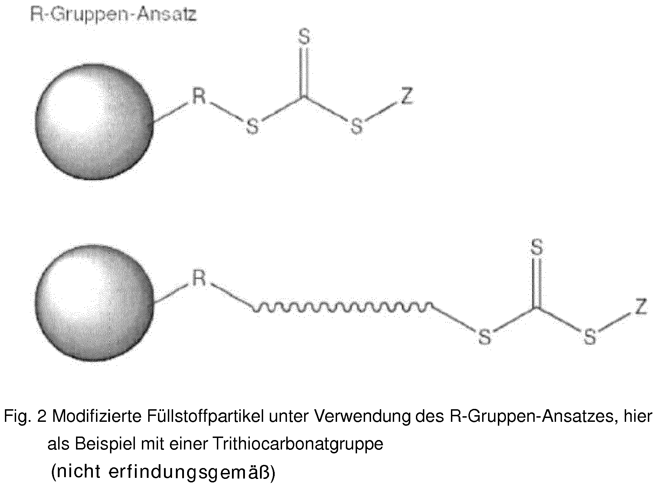

Die Anbindung von Diels-Alder-RAFT-Agentien erfolgt gemäß dem obigen Verfahren folglich über die R-Gruppe und die anschließende RAFT-Polymerisation erfolgt somit von der festen Füllstoffoberfläche aus. Der Begriff RAFT-Agens wird in dieser Schrift synonym zu dem Begriff "Kontrollagens für die kontrollierte radikalische Polymerisation" verwendet.
Überraschenderweise wurde gefunden, dass die Etablierung der Diels-Alder-Gruppe an die abgangsfähige R-Gruppe des RAFT-Agens (R-Gruppen-Ansatz, siehe Fig.2) folgende Vorteile hat:
Das reaktive Zentrum für die Addition wachsender Makroradikale entfernt sich im Laufe der Polymerisation von der Oberfläche. Dies impliziert in Relation zur Verankerung über die Z-Gruppe eine verminderte sterische Hinderung zwischen wachsenden und an der Oberfläche verankerten Ketten und somit einen höheren Belegungsgrad. Dies ist vor allem für schwierig zu kontrollierende Monomere wie 1,3-Diene von Bedeutung.
Nach Abschluss der kontrolliert radikalischen Polymerisation befindet sich die funktionelle Gruppe des RAFT-Agens am freien Kettenende, welches nicht auf der Füllstoffoberfläche verankert ist. Dies eröffnet Wege zur nachträglichen Modifikation des funktionalisierten Füllstoffs.
Die Tatsache, dass die Verankerung des Polymers im Gegensatz zum Z-Gruppen-Ansatz nicht über die RAFT-Gruppe erfolgt, impliziert zudem eine erhöhte Stabilität des Endproduktes.
Die Verankerung des RAFT-Agens auf der Füllstoffoberfläche erfolgt quantitativ und kann somit über die Einwaagen gesteuert werden. Dadurch können modifizierte bzw. funktionalisierte Füllstoff-Partikel mit unterschiedlichsten Beladungsdichten hergestellt werden, welche die genannten Vorteile aufweisen.

Bei dem Füllstoff handelt es sich um Ruß.

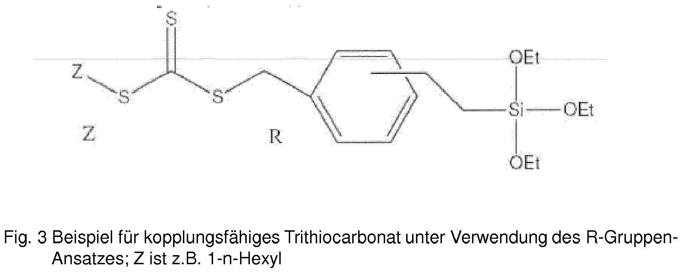

Als RAFT-Agens wird die Klasse der Trithiocarbonate (=Salze der Trithiokohlensäure) gewählt, da diese leicht zu synthetisieren sind und selbst bei Zerstörung der RAFT-Gruppe ein Thiol als funktionelle Gruppe erhalten bleibt (siehe auch Fig.3). Hierbei sind Propyl-(phenylmethyl)-trithiocarbonat (PPT) und Propyl-((trimethoxysilan)ethyl-phenylmethyl)-trithiocarbonat (PPTS) und 1,6-Hexyl-di((trimethoxysilanethyl-phenylmethyl)-trithiocarbonat (HDPS) und Bis(1-phenylethyl)trithiocarbonat (BPETC) besonders zu erwähnen.
Im Folgenden wird die Herstellung einzelner bevorzugter RAFT-Agentien dargestellt:

### Herstellung Bis(1-phenylethyl)trithiocarbonat (BPETC)

Ein Gemisch aus Schwefelkohlenstoff (1,90 g; 0,025 mol) und Caesiumcarbonat (8,14 g; 0,025 mol) in *N,N*-Dimethylacetamid (20 ml) wird für 20 Minuten bei Raumtemperatur gerührt. Es kommt zu einer intensiven Rotfärbung der Reaktionsmischung.
Es erfolgt die langsame Zugabe von 1-Bromo-ethylbenzol (4,62 g; 0,025 mol) in *N,N-*Dimethylacetamid (5 ml). Die Reaktionslösung wird für 24 Stunden bei Raumtemperatur gerührt und danach in Eiswasser (150 ml) überführt. Die wässrige Phase wird mit Essigester (3 mal 50 ml) extrahiert. Die vereinigten organischen Phasen werden über Natriumsulfat getrocknet und das Lösungsmittel im Hochvakuum entfernt. Das gewünschte Produkt wird als gelbliches Öl (7,79 g) in einer Ausbeute von 98% erhalten.

### Herstellung von Propyl-(phenylmethy)trithiocarbonat (PPT)

Zu einer Lösung von Propanthiol (3,00 g; 0,039 mol) in Chloroform (200 ml) erfolgt die langsame Zugabe von Triethylamin (4,78 g; 0,047 mol). Das Reaktionsgemisch wird für eine Stunde bei Raumtemperatur gerührt. Anschließend erfolgt die Zugabe von Schwefelkohlenstoff (7,50; 0,098 mol) und das Reaktionsgemisch wird für weitere zwei Stunden bei Raumtemperatur gerührt. Danach erfolgt die Zugabe von Benzylbromid (8,08 g; 0,047 mol) und die Reaktionslösung wird für 24 Stunden bei Raumtemperatur gerührt. Es erfolgt die Zugabe von 10%iger Salzsäure (200 ml). Die organische Phase wird abgetrennt und mit Wasser gewaschen (3 mal 100 ml). Die vereinigten organischen Phasen werden über Natriumsulfat getrocknet und das Lösungsmittel im Hochvakuum entfernt. Das gewünschte Produkt wird als gelbliches Öl (9,36 g) in einer Ausbeute von 98% erhalten.

### Herstellung von Furfuryl-2-bromopropionat (nicht erfindungsgemäß)

Zu einer eisgekühlten Lösung von 2-Furylmethanol (5,10 g; 0,052 mol) in 70 ml Chloroform wird Triethylamin (5,26 g; 0,052 mol) hinzugegeben. Danach erfolgt die langsame Zugabe von 2-Bromopropionylbromid (9,93 g; 0,046 mol) in 10 ml Chloroform. Die Reaktionsmischung wird für 24 h bei RT gerührt. Zur Aufarbeitung wird das Reaktionsgemisch mit Wasser (1 mal 80 ml), 10 %iger Schwefelsäure (1 mal 80 ml) und mit gesättigter NaHCO₃-Lsg. (2 mal 50 ml) gewaschen. Die organische Phase wird über Magnesiumsulfat getrocknet, eingeengt und im Hochvakuum getrocknet. Die Ausbeute beträgt 67%.

### Herstellung von Furfuryl-2-bromopropanthioat (nicht erfindungsgemäß)

Die synthetische Prozedur ist analog zu der Reaktionsvorschrift von Furfuryl-2-bromopropionat, außer das anstatt 2-Furylmethanol 2-Furuylmethanthiol (5,94 g, 0,052 mol) verwendet wird.

### Herstellung von Natrium-(propyl)-trithiocarbonat:

Zu einer eisgekühlten Lösung von Propanthiol (4,00 g; 0,053 mol) in 50 ml Tetrahydrofuran erfolgt die Zugabe von 50 %iger Natriumhydroxidlösung. Danach erfolgt die langsame Zugabe von CS₂ (4,00 g; 0,053 mol). Dabei ist darauf zu achten, dass die Temperatur 10 °C nicht übersteigt. Die Reaktionsmischung wird für 24 h bei Raumtemperatur gerührt und aus Hexan umkristallisiert. Die Ausbeute beträgt 64 %.

### Herstellung von Propyl-(Furfurylpropanioat)-trithiocarbonat

Zu einer Lösung von Furfuryl-2-bromopropionat (1,49 g; 0,0064 mol) in DMSO (25 ml) wird eine Lösung von Natrium-(propyl)-trithiocarbonat (1,12 g; 0,0064 mol) in 10 ml DMSO hinzugegeben. Das Reaktionsgemisch wird bei RT für 48 h gerührt und danach mit Diethylether (3 mal 20 ml) gewaschen. Die vereinigten organischen Phasen werden mit Wasser gewaschen und über Natriumsulfat getrocknet. Das Lösungsmittel wird im Hochvakuum verdampft und das Produkt wird mit einer Ausbeute von 72 % erhalten.

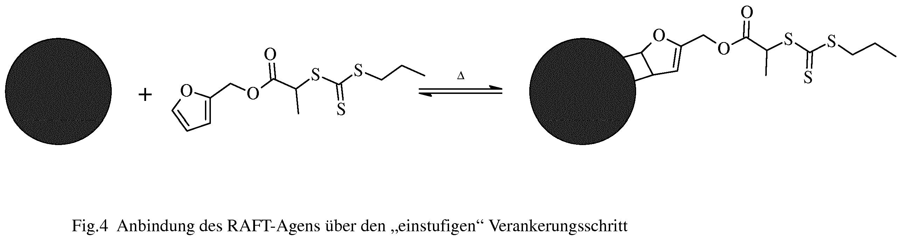

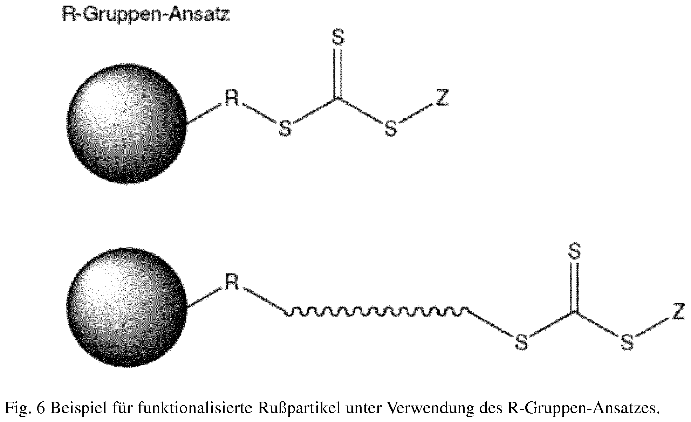

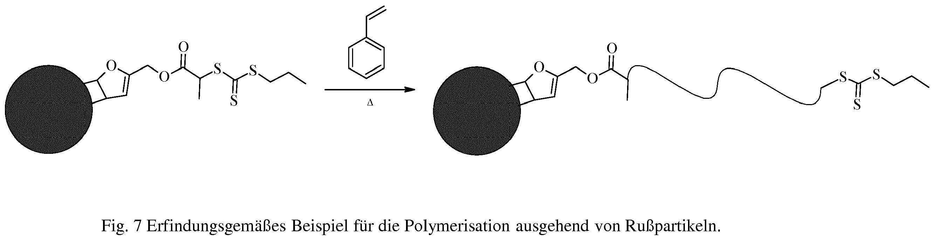

Die Anbindung des RAFT-Agens an die Oberfläche der Füllstoffpartikel erfolgt bei dem Füllstoff Ruß über eine Diels-Alder-Reaktion (siehe Fig. 4, 5 und 6).
Die Verankerung unter Ausnutzung der Diels-Alder-Reaktion und der strukturelle Aufbau des RAFT-Agens implizieren folgende Vorteile:
1) Die Anbindung erfolgt ohne die Bildung von Nebenprodukten und kann unter milden Reaktionsbedingungen durchgeführt werden.
2) Es werden keine weiteren Zusätze benötigt (auch nicht in katalytischen Mengen).
3)Die Immobilisierung kann in einer ein- bzw. zweistufigen Synthesestrategie durchgeführt werden. Es ist auch möglich, dass die Immobilisierung über eine Steglich-Veresterung erfolgt.
4) Die Immobilisierung erfolgt nicht quantitativ. Allerdings kann die Beladungsdichte über die Reaktionsdauer und die Temperatur gesteuert werden und ggf. mittels Elementaranalyse überprüft werden.
5) Aufgrund des strukturellen Aufbaus des RAFT-Agens kann nach Beendigung der Polymerisation die Polymerkette an der Ester- bzw. Thioesterbindung abgespalten werden, um eine Analyse hinsichtlich Molekulargewicht und Molekulargewichtsverteilung zu ermöglichen.

Die Immobilisierung erfolgt über die R-Gruppe, womit sich folgende Vorteile ergeben:
1) Das reaktive Zentrum für die Addition wachsender Makroradikale entfernt sich im Laufe der Polymerisation von der Oberfläche. Dies impliziert in Relation zur Verankerung über die Z-Gruppe eine verminderte sterische Hinderung zwischen wachsenden und an der Oberfläche verankerten Ketten. Somit kann ein höherer Belegungsgrad realisiert werden.
2) Nach Abschluss der kontrolliert radikalischen Polymerisation befindet sich die funktionelle Gruppe des RAFT-Agens am freien Kettenende, welches nicht auf der Füllstoffoberfläche verankert ist. Dies eröffnet Wege zur nachträglichen Modifikation des Kettenendes.
3) Die Etablierung der funktionellen RAFT-Gruppe am Polymerkettenende impliziert einen gewissen Anteil von Schwefelatomen, welche z.B. bei der Vulkanisation verwendet werden können.

### Herstellung von oberflächenmodifizierten Rußpartikeln in einstufiger Syntheseführung

Als Beispiel siehe Fig. 4.
In einer typischen Umsetzung wird Propyl-(2-Furfuryl-2-propanioat)-trithiocarbonat (1,31 g; 0,0043 mol) zu einer Suspension von Ruß (0,557 g; 0,046 mol) in 30 ml Dibenzylether gegeben und das Reaktionsgemisch für 24 Stunden bei 100°C gerührt. Danach wird der Ruß im Soxhlet mit THF für mehrere Stunden gewaschen und anschließend im Hochvakuum getrocknet.
Im Vergleich zum unbehandelten Ruß bestimmt die Elementaranalyse eine Beladungsdichte von 0,118 mmol RAFT-Agens pro Gramm Ruß.

### Herstellung von oberflächenmodifizierten Rußpartikeln in zweistufiger Syntheseführung (nicht erfindungsgemäß)

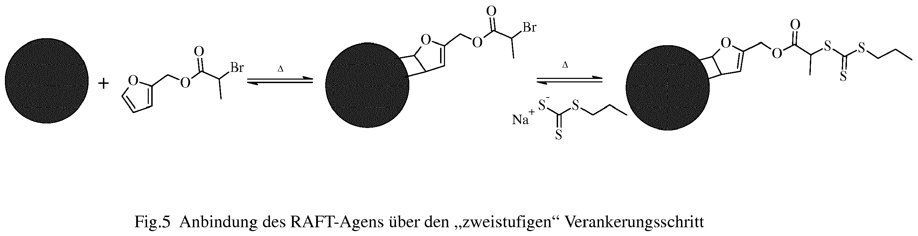

Als Beispiel siehe Fig. 5.
In einer typischen Umsetzung wird Furfuryl-2-bromopropionat (2,09 g, 0,009 mol) zu einer Suspension von Ruß (5,40 g; 0,450 mol) in 200 ml Dibenzylether getropft und das Reaktionsgemisch für 48 Stunden bei 130°C gerührt. Danach wird der Ruß im Soxhlet mit THF gewaschen und im Hochvakuum getrocknet.
Der getrocknete Ruß (5,40 g; 0,450 mol) wird in Dimethylsulfoxid suspendiert und danach mit Natrium-(propyl)-trithiocarbonat (1,71 g; 0,009 mol) versetzt. Das Reaktionsgemisch wird bei Raumtemperatur für 24 Stunden gerührt, im Soxhlet mit THF gewaschen und im Hochvakuum getrocknet.
Im Vergleich zum unbehandelten Ruß bestimmt die Elementaranalyse eine Beladungsdichte von 0,192 mmol RAFT-Agens pro Gramm Ruß.
Als Monomere können alle radikalisch polymerisierbaren Monomere einzeln oder in Kombination verwendet werden, so dass sich nach Abschluss der Polymerisation ein Homopolymer oder ein Copolymer oder ein Blockpolymer oder ein Blockcopolymer ergibt. Vorzugsweise handelt es sich hierbei um 1,2-Butadien, 1,3-Butadien, Isopren, Styrol, Acrylnitril, 2-Propennitril, Vinylverbindungen, Methacrylverbindungen, Acrylverbindungen und so genannte "En"-Verbindungen, wie bspw. Norbornene. Als besonders geeignet haben sich Dien-Monomere und hier bevorzugt Butadien-Monomere zur Ausbildung von Polybutadien oder Butadien-Copolymeren erwiesen.

Desweiteren sind Kautschukmischungen beschrieben, welche sich durch eine verbesserte Polymer-Füllstoff-Anbindung und eine verbesserte Dispersion des Füllstoffs in der Kautschukmischung auszeichnen. Dadurch bedingt zeigen sich optimierte physikalische Eigenschaften der Kautschukmischung.

Diese Kautschukmischung enthält polymer-funktionalisierte Füllstoffpartikel, welche nach dem erfindungsgemäßen Verfahren hergestellt wurden. Durch die bereits oben genannten Eigenschaften der polymer-funktionalisierten Füllstoffpartikel ergeben sich optimierte physikalische Eigenschaften der Kautschukmischung
Die Kautschukmischung kann für die Herstellung von Reifen, insbesondere Pkw-Reifen, LKW-Reifen, Zweiradreifen oder Industriereifen, welche auch als Vollgummireifen ausgeprägt sein können, verwendet werden. Bevorzugt wird die Kautschukmischung als Laufstreifen eingesetzt, aber auch die Verwendung als Kautschukmischung für die inneren Bauteile (body compounds) ist möglich. Des Weiteren kann die Kautschukmischung zur Herstellung von technischen Gummiartikeln, wie beispielsweise Gurte, Riemen, Schläuche, Dichtungen, Luftfederbälgen und Drucktüchern verwendet werden.
Die Kautschukmischung kann zusätzlich, neben dem bereits aus den polymermodifizierten Füllstoffpartikeln vorhandenen Kautschuk, zumindest einen weiteren polaren oder unpolaren Kautschuk enthalten.
Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder hydrierter Acrylnitrilbutadienkautschuk und / oder Isopren-Butadien-Copolymer und / oder hydrierter Styrolbutadienkautschuk.
Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, zum Einsatz.
Die Kautschukmischung enthält des Weiteren die nach dem erfindungsgemäßen Verfahren hergestellten polymer-funktionalisierten Rußpartikel. Die Kautschukmischung enthält dabei bevorzugt 1 bis 180 phr, besonders bevorzugt 1 bis 170 phr und ganz besonders bevorzugt 1 bis 100 phr polymer-funktionalisierte Rußpartikel.

Es ist auch möglich, dass die Kautschukmischung entweder nur polymer-funktionalisierte Rußpartikel, oder aber zusätzlich auch polymer-funktionalisierte Kieselsäurepartikel enthalten kann.
Weitere, in der Kautschukindustrie bekannte Füllstoffe, wie Aluminiumoxid, Talk, Kaolin, Karbonate, Metalloxide (bspw. Mg-Oxide, Fe-Oxide, Ti-Oxide), Glimmer, Kohlenstofffasern, Tonminerale, modifizierte Schichtsilikate und weitere sind möglich. Ebenso können noch Fasern, z. Bsp. aus Aramid oder Nylon, Mikrohohlkugeln, oder Glasflocken in der Kautschukmischung enthalten sein.

Weiterhin enthält die Kautschukmischung noch weitere Zusatzstoffe.
Weitere Zusatzstoffe beinhaltet im Wesentlichen Weichmacher, Zinkoxid, das Vernetzungssystem (Vernetzer, Schwefelspendern und / oder elementaren Schwefel, Beschleuniger und Verzögerer), Ozonschutzmittel, Alterungsschutzmittel, Mastikationshilfsmittel und weitere Aktivatoren bzw. Verarbeitungshilfsmittel.
Der Mengenanteil der Gesamtmenge an weiteren Zusatzstoffen beträgt 3 bis 150 phr, bevorzugt 3 bis 100 phr und besonders bevorzugt 5 bis 80 phr.
Als Weichmacher werden bevorzugt Mineralöle, wie beispielsweise DAE (Destillated Aromatic Extracts), RAE (Residual Aromatic Extract), TDAE (Treated Destillated Aromatic Extracts), MES (Mild Extracted Solvents) und / oder naphtenische Öle und /oder synthetische Weichmacher und / oder Fettsäuren und / oder ein Fettsäurederivate und / oder ein Harze und / oder ein Faktisse und / oder Pflanzenöle oder BTL-Öle (Biomass- To-Liquid) und / oder Flüssigpolymere eingesetzt.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

## Patentansprüche

1. Verfahren zur Herstellung polymer-funktionalisierter Füllstoffpartikel, **gekennzeichnet durch** wenigstens folgende Verfahrensschritte:
- Anbindung eines Diels-Alder-Kontrollagens zur kontrollierten radikalischen Polymerisation an die Oberfläche eines Füllstoffpartikels, wobei die Gruppe R des RAFT-Agens über eine Gruppe R1 an die Oberfläche eines Füllstoffpartikels angebunden ist, wobei R1 wenigstens eine Diels-Alder-reaktive Funktionalität ist, wobei es sich bei den Füllstoffpartikeln um Rußpartikel handelt, wobei das Kontrollagens zur kontrolliert radikalischen Polymerisation ausgewählt ist aus der Gruppe der Trithiocarbonate und
- anschließende kontrollierte radikalische Polymerisation von Monomeren mit Hilfe des Kontrollagens, welches an dem Füllstoffpartikel gebunden ist.

2. Verfahren nach Anspruch 1, **dadurch gekennzeichnet, dass** wenigstens eines der Monomere ein Dien-Monomer ist.

## Claims

1. Process for producing polymer-functionalized filler particles, **characterized by** the following steps at least:
- binding a Diels-Alder control agent for controlled free-radical polymerization to the surface of a filler particle, wherein the R group of the RAFT agent becomes bound to the surface of a filler particle via an R1 group, wherein R1 is at least one Diels-Alder-reactive functionality, wherein the filler particles are particles of carbon black, wherein the control agent for controlled free-radical polymerization is selected from the group of trithiocarbonates, and
- then performing a controlled free-radical polymerization of monomers using the control agent bound to the filler particle.

2. Process according to Claim 1, **characterized in that** at least one of the monomers is a diene monomer.

## Revendications

1. Procédé de fabrication de particules de charge à fonctionnalisation polymère, **caractérisé par** au moins les étapes de procédé suivantes :
- la liaison d'un agent de contrôle de Diels-Alder pour la polymérisation radicalaire contrôlée sur la surface d'une particule de charge, le groupe R de l'agent RAFT étant relié par un groupe R1 sur la surface d'une particule de charge, R1 étant au moins une fonctionnalité réactive de Diels-Alder, les particules de charge consistant en des particules de suie, l'agent de contrôle pour la polymérisation radicalaire contrôlée étant choisi dans le groupe des trithiocarbonates et
- par la suite la polymérisation radicalaire contrôlée de monomères à l'aide de l'agent de contrôle qui est relié à la particule de charge.

2. Procédé selon la revendication 1, **caractérisé en ce qu'**au moins un des monomères étant un monomère diène.
